# EUROPÄISCHE PATENTSCHRIFT

(11) **EP 0 475 055 B1**
(45) Veröffentlichungstag und Bekanntmachung des Hinweises auf die Patenterteilung: **27.04.1994**
(21) Anmeldenummer: 91112847.8
(22) Anmeldetag: 31.07.1991
(51) Int. Cl.: B65D 85/672, G11B 23/027

(54) **Packungssystem für auf Kerne gewickelte Magnetbänder**
Package system for a multiplicity of core-wound magnetic tapes
Système d'emballage pour une pluralité de bandes magnétiques enroulées autour d'un noyau

(30) Priorität: 16.08.1990 DE 4025906; 16.08.1990 DE 9011867 U
(43) Veröffentlichungstag der Anmeldung: 18.03.1992
(73) Patentinhaber: BASF Magnetics GmbH, 68165 Mannheim (DE)
(72) Erfinder: Toral, Jose, W-8000 Muenchen 25 (DE); Brandstetter, Hermann, W-8000 Muenchen 70 (DE); Lutz, Gottfried, W-8031 Seefeld (DE); Thiele, Hartmut, W-8000 Muenchen 70 (DE); Liepold, August, W-8000 Muenchen 70 (DE)
(74) Vertreter: Karau, Wolfgang, Dr.

(56) Entgegenhaltungen:
- EP-A- 0 320 751
- DE-U- 8 912 747
- GB-A- 517 564
- US-A- 2 631 725
- US-A- 2 706 592

## Beschreibung

Die Erfindung betrifft eine quaderförmiges Verpackungssystem für auf mit inneren Bohrungen versehene Kerne aufgewickelte magnetische Aufzeichnungsträger (sogenannte Pancakes), bestehend aus einem Boden- und Deckelteil und einem durch eine Kreisförmige, zentrale Öffnung des Boden- und Deckelteils und durch die inneren Bohrungen der Wickelkerne schieb- und verriegelbare Kernstütze.

Weltweit werden von den Magnetband-Fabriken sogenannte Rohwaren-Verpackungen in großen Mengen verkauft. In diesen ist das Magnetband auf Kerne, beispielsweise flanschlose Wickelkerne, entweder die sogenannten NAB-Kerne oder stapelbare Wickelkerne gemäß US-A-4 081 151 oder andere, aufgewickelt. Diese Pancakes werden zur Zeit entweder einzeln oder in Sammelgebinden verpackt und mit einer Schrumpffolie überzogen oder durch verschiedene Kartonagen gehalten.

Der Nachteil bei der Einzelverpackung besteht darin, daß ein großer Teil von Verpackungsmaterial eingesetzt werden muß.

Verpackungsbehälter der eingangs genannten gattungsmäßigen Art sind aus der DE-U-89 12 747 sowie der EP-A- 0 320 751 bekannt. Die dort getroffenen Maßnahmen zum Schutz des Inhalts bedingen, daß die Verpackungsbehälter zum Entnehmen des Inhalts nicht einfach auseinanderzunehmen sowie nicht ohne weiteres zur Wiederverwendung geeignet sind.

Magnetband-Sammelverpackungen sind ferner durch die Veröffentlichungen US-A-3 543 922, US-A-4 708 246, GB-A-517 564, DE-U-88 15 897, DE-U- 89 00 709, EP-A- 0 171 263 sowie DE-U-89 12 749 bekannt. Diese Verpackungen bestehen entweder aus relativ voluminösem Styropor, was ein an sich nutzloses hohes Transportvolumen bedeutet und welches nach Auspacken des Inhalts entsorgt werden muß oder die Verpackung wird durch Kunststoff-Paletten und Hülsen zusammengehalten, wobei die Hülsen relativ kompliziert aufgebaut sind und wobei teilweise die Seitenteile des Verpackungsgutes ungenügend geschützt sind, da sie lediglich durch eine über die Verpackung aufgeschrumpfte Folie bedeckt ist. Daher muß diese Verpackung zum Transport noch zusätzlich in einen Außenkarton gesteckt werden.

Deshalb bestand die Aufgabe, eine Verpackung für Pancakes der oben genannten gattungsmäßigen Art zu finden, welche gleichzeitig folgende Bedingungen erfüllt:
- Einfacher und kostengünstiger Aufbau
- transportsichere Unterbringung der Pancakes
- einfach zusammenzusetzen und auszupacken
- geringes Transportvolumen
- wiederverwendbar oder recyclingfähig
- keine zusätzliche Außenverpackung erforderlich

Erfindungsgemäß wurde die Aufgabe gelöst mit einer Verpackung mit den im kennzeichnenden Teil des Anspruchs 1 genannten Merkmalen. Weitere Ausgestaltungen der Erfindung gehen aus den Unteransprüchen, den Zeichnungen und der Beschreibung hervor.

Nachstehend wird die Erfindung anhand der Zeichnungen näher erläutert und zwar zeigen
- Figur 1: eine explosionsartige perspektivische Darstellung des Verpackungsbehälters
- Figur 2: eine entsprechende perspektivische Darstellung des komplett zusammengefügten Verpackungsbehälters
- Figur 3: zum Rücktransport aufeinandergestapelte Boden- und Deckelteile des Verpackungsbehälters
- Figuren 4 - 6: eine bevorzugte Ausführung für die Kernhülse

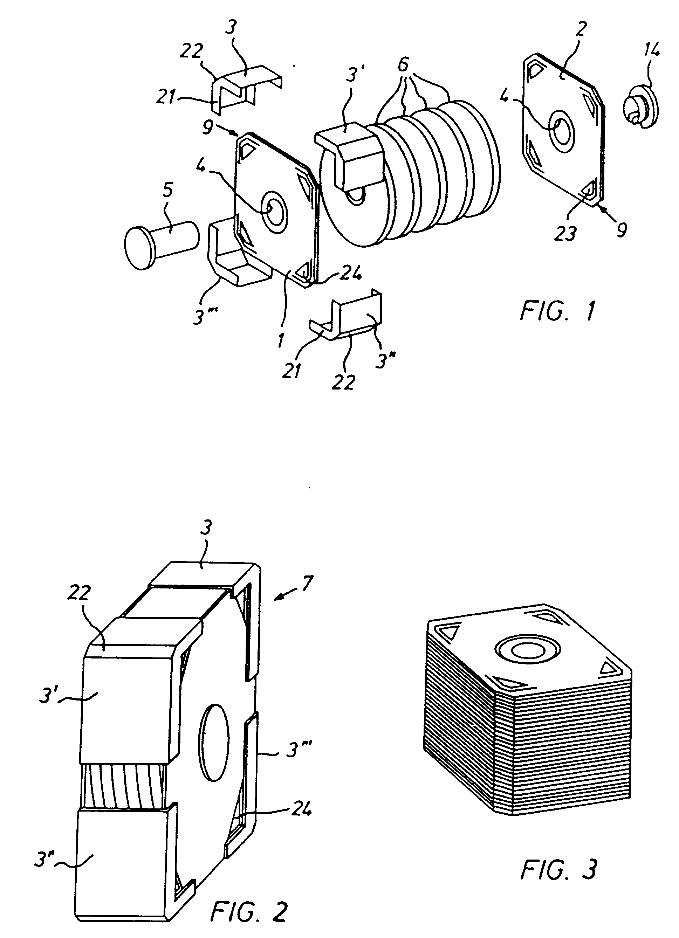

Wie aus Figur 1 erkennbar, besteht der erfindungsgemäße Verpackungsbehälter aus einem Bodenteil (1), einem Deckelteil (2), vier Seitenteilen (3, 3', 3'', 3''') sowie einer Kernstütze (5), welche in einer bevorzugten Ausführung der Neuerung zweiteilig mit einem Schnappring (14) zusammenwirkt. Aufbau und Funktion der genannten Teile werden nachfolgend näher erläutert.

Boden- und Deckelteil sind identisch aufgebaut als quadratische Platte mit einer kreisförmigen zentralen Öffnung (4), deren Durchmesser dem Durchmesser der inneren Bohrung der Wickelkerne zum Aufwickeln der Pancakes (6) entspricht. Die vier Ecken der geschilderten quadratischen Platten sind bevorzugt abgeschrägt (9). Weiterhin besitzen bevorzugterweise die Innenseiten des Boden- und des Deckelteils (1, 2) dreieckförmige Vorsprünge (23), welche in die Platte eingeprägt und den Ecken (9) benachbart sind. Auf diese Weise begrenzen diese Vorsprünge (23) den Innenraum des Verpackungsbehälters (7) in den die Pancakes (6) aufeinandergestapelt werden.

Den Vorsprüngen (23) liegen auf den jeweiligen Außenseiten des Boden- und Deckelteils entsprechend geformte Vertiefungen (24) gegenüber.

Weiterhin besteht die Verpackung aus vier identisch aufgebauten Seitenteilen (3, 3', 3'', 3'''). Diese sind orthogonale offene Winkel, deren Kante (22) ebenso wie die Ecken (9) des Boden- und des Deckelteils abgeschrägt sind. An ihren beiden Seitenschenkeln haben die Seitenteile (3, 3', 3'', 3''') beiderseits Seitenlaschen (21), welche parallel zum Boden- beziehungsweise Deckelteil verlaufen. Wie aus den Figuren 1 und 2 erkennbar, werden beim Zusammenfügen des neuerungsgemäßen Verpackungsbehälters die vier Seitenteile über die vier Kanten des Boden- und des Deckelteils sowie der zwischen ihnen befindlichen Pancakes (6) geschoben und bewirken auf diese Weise schon einen Zusammenhalt des neuerungsgemäßen Verpackungsbehälters. Dazu entspricht die Breite der vier Seitenteile der Höhe des zusammengefügten Verpakkungsbehälters.

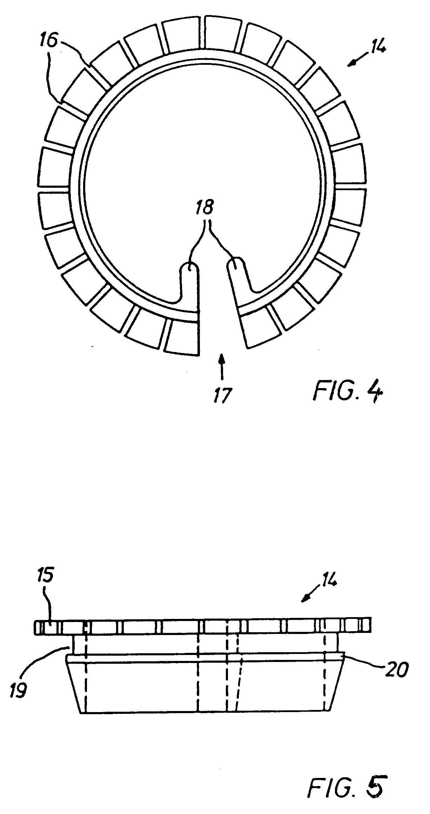

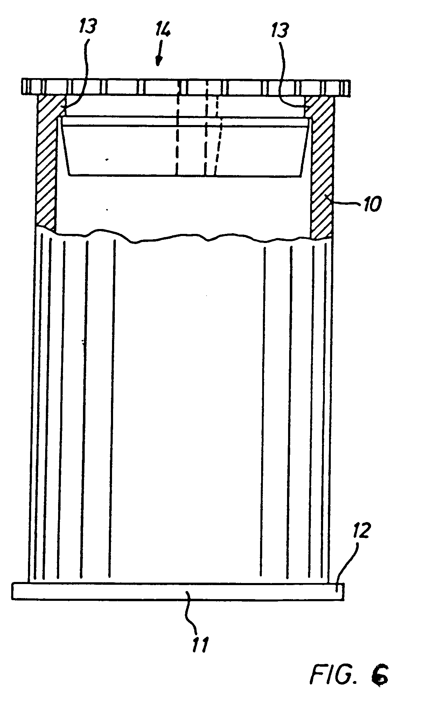

Der Aufbau der für die Erfindung wesentlichen Kernhülse geht aus den Figuren 4 bis 6 hervor. Die Kernhülse ist in einer bevorzugten Ausführung zweiteilig. Sie besteht aus einem hohlzylindrischen Teilstück (10), welches an dem einen Ende einteilig durch einen Deckel (11) mit überstehendem Rand (12) abgeschlossen ist. Das andere offene Ende ist an der Innenseite mit einer umlaufenden Verdickungskante (13) versehen, welche ein hohlzylindrischer Schnappring (14) als zweites Teil der Kernhülse einschnappbar hintergreift.

Der Schnappring (14) ist, wie bereits angeführt, bevorzugt hohlzylindrisch ausgeführt. Er hat an seinem einen Ende einen Kreisring (15), dessen Peripherie wie beim geschlossenen Ende der Kernhülse über den hohlzylindrischen Körper absteht. Der Kreisring ist mit mehreren im wesentlichen radial verlaufenden Einkerbungen (16) zumindest in einem Teil seines Umfanges versehen. Er weist eine offene Stelle (17) auf, wobei beiderseits der Öffnung radial nach innen verlaufende Griffleisten (18) zur Schnappbetätigung vorgesehen sind. Die zylindrische Fläche des Schnappringes (14) besitzt anschließend an den Ring (15) eine umlaufende Rille (19), an die sich in axialer Richtung eine Verdickung (20) anschließt, die zum Ende des Hohlzylinders hin konisch nach innen verlaufend abgeschrägt ist. Die axiale Länge der Rille (19) entspricht der axialen Länge der Verdickung (13) der Kernhülse.

Beim Zusammenfügen der Verpackung kann, wie bereits oben geschildert, zunächst das Bodenteil (1) auf die Kernhülse bis zum Anschlag des überstehenden Deckels (12) aufgesteckt werden, und nach Aufstecken des Verpackungsgutes, der Pancakes (6), wird das Deckelteil (2) aufgesetzt, und der federnd zusammendrückbare Schnappring (14) wird auf das offene Ende der Kernhülse (5) aufgesetzt und mit dieser durch Loslassen der Grifflaschen (18) verriegelt, danach können wie bereits beschrieben, die vier Seitenteile (3, 3', 3'', 3''') über die Kanten gesteckt werden.

Anschließend kann über die so hergestellte Verpackung (7) noch eine Kunststoff-Folie, wie aus dem Stand der Technik bekannt, aufgeschrumpft werden. Vorzugsweise sind die Ecken des Boden- und Deckelteils sowie der Seitenteile abgeschrägt, so daß sich eine oktogonförmige Außenfläche ergibt, welche das gleichmäßige Aufziehen der Schrumpffolie erleichtert.

Eine weitere, zeichnerisch nicht dargestellte Lösung ist dadurch gegeben, daß die Kernhülse beiderseits offen ist und an beiden Enden innen mit einer kantenartigen Verdickung (13) versehen ist, in die Schnappringe (14), wie oben beschrieben, beiderseits eingreifen.

Ebenso ist auch eine einteilige Ausführung der Kernhülse (5) möglich, wobei diese an ihrem offenen Ende mehrere mit der Kernhülse verbundene Schnappelemente hat, die nach dem Zusammenfügen der Verpackung (7) nach außen klappbar sind und auf diese Weise das Zusammenhalten der Verpackung gewährleisten.

Das Bodenteil, das Deckelteil und die Seitenteile bestehen beispielsweise aus Karton; die Hülse besteht aus Kunststoff, beispielsweise aus Polystyrol. In einer bevorzugten Ausführung bestehen alle Teile der neuerungsgemäßen Verpackung aus Kunststoff.

Aus dem oben Ausgeführten geht hervor, daß das Auspacken des Verpackungsbehälters gemäß der vorliegenden Erfindung nur wenige Handgriffe erfordert. Ebenso ist aus der geschilderten Konstruktion auch ohne weiteres ersichtlich, daß sich die verwendeten Teile, insbesondere Boden- und Deckelteil nach dem Entpacken in raum- und kostensparender Weise zum Rücktransport eignen.

Wie aus der Figur 3 ersichtlich, werden dazu die Platten zweckmäßigerweise so aufeinandergelegt, daß die den Ecken (9) benachbarten Vorsprünge (23) jeweils in Vertiefungen (24) der nächsten Platte eintauchen, so daß die Platten beim Rücktransport praktisch abstandslos aufeinanderliegen.

Gegebenenfalls kann die Kernhülse granuliert und wiederverwendet werden. Die aus Kunststoff hergestellte Kernhülse kann geblasen, tiefgezogen oder gespritzt werden. Die infrage kommenden Materialien, beispielsweise Polystyrol, sind jedem Fachmann bekannt.

Durch den Verpackungsbehälter wird die eingangs genannte Aufgabenstellung vollständig gelöst. Als weiterer Vorteil ergibt sich, daß die komplette Verpackung mit mehreren aufeinandergestapelten Pancakes komplett in eine aus dem Stand der Technik bekannte Löschdrossel zum Entmagnetisieren der magnetischen Aufzeichnungsträger geschoben werden kann, was bei den bisher bekannten Styroporverpackungen nicht möglich war.

## Patentansprüche

1. Quaderförmiges Verpackungssystem für auf mit inneren Bohrungen versehene Kerne aufgewickelte magnetische Aufzeichnungsträger (sogenannte Pancakes), bestehen aus einem Boden- (1), und Deckelteil (2) und einer durch eine kreisförmige des Boden- und Deckelteils und zentrale Öffnung (4) durch die inneren Bohrungen der Wickelkerne schieb- und verriegelbare Kernstütze (5), dadurch gekennzeichnet, daß das Bodenteil (1) und das Deckelteil (2) jeweils eine quadratische Platte sind, daß aus vier rechteckigen Winkeln mit beiderseits an ihren zwei Schenkeln nach innen senkrecht verlaufenden Seitenlaschen (21) gebildete Seitenteile (3, 3', 3'', 3''') vorgesehen sind, daß die als ein- oder mehrteilige Kernhülse (5) ausgebildete Kernstütze durch die Öffnungen (4) und durch die inneren Bohrungen der Wickelkerne der Pancakes (6) mittels eines Schnappringes (14) verriegelbar durchsteckbar ist und daß die Breite der Seitenteile (3, 3', 3'', 3''') so bemessen ist, daß zum Zusammenfügen des Verpackungsbehälters (7) die Seitenteile (3) über die Kanten des Boden- und des Deckelteils mit den dazwischen befindlichen Pancakes aufschiebbar sind.

2. Verpackungssystem nach Anspruch 1, dadurch gekennzeichnet, daß die Ecken (9) des Boden- und des Deckelteils (1, 2) sowie die Kanten (22) der Seitenteile (3, 3', 3'', 3''') abgeschrägt sind und daß benachbart den vier Ecken (9) der den Pancakes (6) zugewandten Innenseiten des Boden- und des Deckelteils dreieckförmige Vorsprünge (23) eingeprägt sind, welche den Innenraum des Verpackungsbehälters begrenzen und wobei den Vorsprüngen an den Außenseiten der Platten entsprechend geformte Vertiefungen (24) gegenüberliegen.

3. Verpackungssystem nach Anspruch 1, dadurch gekennzeichnet, daß die Kernhülse (5) aus einem hohlzylindrischen Teilstück (10) besteht, welches an einem Ende einteilig durch einen Deckel (11) mit überstehendem Rand (12) abgeschlossen ist und dessen anderes Ende offen und an der Innenfläche mit einer umlaufenden Verdickungskante (13) versehen ist, in die ein deckelartiger hohlzylindrischer Schnappring (14) mit überstehendem Rand (15) einschnappbar eingreift.

4. Verpackungssystem nach Anspruch 3, dadurch gekennzeichnet, daß der Schnappring (14) an seinem überstehenden Rand (15) im wesentlichen radial verlaufende Einkerbungen (16) zumindest in einem Teil seines Umfanges aufweist und an einer Stelle (17) offen ist, wobei beiderseits der Öffnung (17) radial nach innen verlaufende Griffleisten (18) zur Schnappbetätigung vorgesehen sind und wobei außerdem benachbart dem Rand (15) in axialer Richtung eine an der Außenseite verlaufende Rille (19) sowie eine sich daran anschließende konisch nach innen verlaufende Verdickung (20) vorgesehen sind.

5. Verpackungssystem nach Anspruch 1, dadurch gekennzeichnet, daß die hohlzylindrische Hülse (5) beiderseits offen und an ihren beiden Enden innen mit einer kantenartigen Verdickung (13) versehen ist, in die Schnappringe (14) gemäß Anspruch 4 eingreifen.

6. Verpackungssystem nach Anspruch 1, dadurch gekennzeichnet, daß die hohlzylindrische Hülse (5) an ihrem einen Ende einteilig durch einen Deckel mit überstehendem Rand verschlossen und an ihrem anderen offenen Ende mit durch den Hohlzylinder verbundene nach außen klappbare Verschlußelemente versehen ist.

## Claims

1. A cuboidal package system for magnetic recording media wound up onto hubs provided with internal bores (known as pancakes), comprising a bottom part (1) and a top part (2) and a hub support (5) which can be pushed through a circular, central opening (4) of the bottom part and top part and through the internal bores of the winding hubs and be locked, wherein the bottom part (1) and the top part (2) are in each case a square plate, wherein side parts (3, 3', 3'', 3''') formed by four rectangular angles with side flanges (21), running inward perpendicularly on both sides of their two legs, are provided, wherein the hub support, designed as a one-part or multi-part hub sleeve (5), can be inserted through the openings (4) and through the internal bores of the winding hubs of the pancakes (6) in such a manner that it can be locked by means of a snap ring (14) and wherein the width of the side parts (3, 3', 3'', 3''') is dimensioned such that, for assembling the package container (7), the side parts (3) are able to be pushed on over the edges of the bottom part and the top part with the pancakes located in between.

2. The package system as claimed in claim 1, wherein the corners (9) of the bottom part (1) and the top part (2) and also the edges (22) of the side parts (3, 3', 3'', 3''') are bevelled and wherein adjacent to the four corners (9) of the inner sides of the bottom part and the top part, facing the pancakes (6), there are embossed triangular projections (23), which bound the inner space of the package container and, lying opposite the projections, on the outer sides of the plates, there are correspondingly shaped depressions (24).

3. The package system as claimed in claim 1, wherein the hub sleeve (5) comprises a hollow-cylindrical piece (10) which is integrally closed off at one end by a cover (11) with protruding rim (12) and the other end of which is open and provided on its inner surface with a peripheral thickened edge (13), into which a cover-like hollow-cylindrical snap ring (14) with protruding rim (15) engages in such a manner that it can snap in.

4. The package system as claimed in claim 3, wherein the snap ring (14) has on its protruding rim (15) substantially radially running notches (16), at least over part of its circumference, and at one location (17) is open, radially inward-running gripping bars (18) being provided on both sides of the opening (17) for snap actuation and there also being provided adjacent to the rim (15) in the axial direction a groove (19) running on the outer side and also a conically inward-running thickening (20) adjoining said groove.

5. The package system as claimed in claim 1, wherein the hollow-cylindrical sleeve (5) is open on both sides and is provided at both its ends on the inside with an edge-like thickening (13), into which snap rings (14) as claimed in claim 4 engage.

6. The package system as claimed in claim 1, wherein the hollow-cylindrical sleeve (5) is integrally closed at its one end by a cover with protruding rim and is provided at its other, open end with closure elements which are connected to the hollow cylinder and can be folded outward.

## Revendications

1. Système d'emballage parallélépipédique pour supports d'enregistrement magnétiques (appelés pancakes), bobinés sur des noyaux, pourvus de perçages internes, composé d'une partie fond (1) et d'une partie couvercle (2) et d'un support de noyau (5), susceptible d'être glissé et verrouillé à travers les perçages internes des noyaux d'enroulement et une ouverture centrale (4), circulaire, de la partie fond et de la partie couvercle, caractérisé en ce que la partie fond (1) et la partie couvercle (2) sont chacune une plaque carrée, en ce que sont prévues des parties latérales (3,3',3'',3'''), formées de quatre angles droits, avec des pattes latérales (21), s'étendant des deux côtés, sur leurs deux branches, perpendiculairement et vers l'intérieur, en ce que le support de noyau (5), réalisé sous forme de douille de noyau (5), en une ou plusieurs parties, peut être verrouillée et enfichée à travers les perçages intérieurs des noyaux d'enroulement des pancakes (6), au moyen d'une bague de blocage (14), et en ce que la largeur des parties latérales (3,3',3'',3''') est telle que, pour opérer l'assemblage du récipient d'emballage (7), les parties latérales (3) peuvent être glissées sur les arêtes de la partie fond et de la partie couvercle, avec les pancakes se trouvant entre elles.

2. Système d'emballage selon la revendication 1, caractérisé en ce que les angles (9) de la partie fond et de la partie couvercle (1, 2), ainsi que les arêtes (22) des parties latérales (3, 3', 3'', 3''') sont chanfreinés et en ce que, au voisinage des quatre angles (9) des faces intérieures, tournées vers le pancake (6), de la partie fond et de la partie couvercle, sont façonnées des saillies triangulaires (23), délimitant l'espace intérieur du récipient d'emballage et des cavités (24) de formes correspondantes aux faces extérieures des plaques étant placées sur les faces extérieures des plaques, en regard des saillies.

3. Système d'emballage selon la revendication 1, caractérisé en ce que la douille de noyau (5) est composée d'une pièce partielle (10) cylindrique creuse, délimitée à une extrémité, d'un seul tenant, par un couvercle (11) à bord (12) dépassant et dont l'autre extrémité est ouverte et pourvue, sur la surface intérieure, d'une arête d'épaississement (13) faisant le pourtour, dans laquelle s'engage, encliquetable, une bague de blocage (14) cylindrique creux, du type d'un couvercle et présentant un bord (15) en saillie.

4. Système d'emballage selon la revendication 3, caractérisé en ce que la bague de blocage (14) présente sur son bord (15) en saillie des entailles (16) s'étendant sensiblement radialement, au moins dans une partie de sa périphérie, et est ouverte à un endroit (17), des bandes de préhension (18) s'étendant radialement vers l'intérieur et destinées à l'actionnement à déclic étant prévues des deux côtés de l'ouverture (17), et où, en outre, au voisinage du bord (15) sont prévus, en direction axiale, une cannelure (19) s'étendant en face extérieure, ainsi qu'un épaississement (20) s'étendant coniquement vers l'intérieur et s'y raccordant.

5. Système d'emballage selon la revendication 1, caractérisé en ce que la douille cylindrique creuse (5) est ouverte des deux côtés et pourvue à ses deux extrémités, intérieurement, d'un épaississement (13) en arête, dans lequel s'engagent les bagues de blocage (14) selon la revendication 4.

6. Système d'emballage selon la revendication 1, caractérisé en ce que la douille (5) cylindrique creuse est obturée à l'une de ses extrémités, d'un seul tenant, par un couvercle à bord dépassant et, à son autre extrémité ouverte, au moyen d'éléments d'obturation reliés au cylindre creux et rabattables vers l'extérieur.
